# EUROPÄISCHE PATENTANMELDUNG

(11) **EP 1 365 186 A2**
(43) Veröffentlichungstag der Anmeldung: **26.11.2003**
(21) Anmeldenummer: 03011619.8
(22) Anmeldetag: 22.05.2003
(51) Int. Cl.: F16L 47/06

(54) **Vorrichtung zum Verbinden zweier Schlauchleitungen**

(30) Priorität: 24.05.2002 DE 10223285
(71) Anmelder: Winkler, Klaus, 69126 Heidelberg (DE)
(72) Erfinder: Winkler, Klaus, 69126 Heidelberg (DE)
(74) Vertreter: Naumann, Ulrich, Dr.-Ing.

(57) **Zusammenfassung**

Eine Vorrichtung zum Verbinden zweier Schlauchleitungen für ein Fluidum, umfassend ein als Eingriffsteil ausgebildetes, der einen Schlauchleitung zugeordnetes erstes Kupplungsstück (2) und ein als Aufnahmeteil ausgebildetes, der anderen Schlauchleitung zugeordnetes zweites Kuppiungsstück (1), weiches zur Aufnahme des Eingriffsteils (2) dient, ist im Hinblick auf eine hohe und zuverlässige Dichtigkeit bei gleichzeitiger einfacher Handhabbarkeit derart ausgestaltet, dass mindestens eines der Kupplungsstücke (1, 2) mindestens zwei unterschiedlich dimensionierte und/oder materialmäßig unterschiedlich beschaffene Bereiche (4, 5) zum Führen des jeweils anderen Kupplungsstücks (1, 2) und zum Abdichten zwischen den Kupplungsstücken (1, 2) aufweist.

## Beschreibung

Die Erfindung betrifft ganz allgemein eine Vorrichtung zum Verbinden zweier Schlauchleitungen für ein Fluidum, insbesondere zweier beheizbarer Schlauchleitungen, wie sie u. a. in der Messtechnik zum Transport eines temperierten Strömungsmediums verwendet werden, beispielsweise um Abgase zu Untersuchungszwecken entsprechenden Analysegeräten zuzuleiten.

Vorrichtungen zum Verbinden von Schlauchleitungen, durch die ein Fluidum geführt wird, sind seit langem aus der Praxis bekannt. Bei den bekannten Vorrichtungen handelt es sich üblicherweise um ein als Eingriffsteil ausgebildetes, der einen Schlauchleitung zugeordnetes erstes Kupplungsstück und ein als Aufnahmeteil ausgebildetes, der anderen Schlauchleitung zugeordnetes zweites Kupplungsstück, welches zur Aufnahme des Eingriffsteils dient. Dabei weist das Eingriffsteil in der Regel ein oder mehrere O-Ringe auf, die beim Eingreifen der beiden Kuppiungsstücke ineinander eine dichte Verbindung der beiden Schlauchleitungen herstellen.

Hinsichtlich der Dichtigkeit einer derartigen Verbindung zweier Schlauchleitungen ist es jedoch problematisch, dass beim Eingreifen des Eingriffsteils in das Aufnahmeteil Verkantungen der beiden Kupplungsstücke gegeneinander auftreten können. Derartige Verkantungen können auch aus einer während des Gebrauchs der Schlauchleitungen auftretenden mechanischen Beanspruchung der Verbindung resultieren. Dies hat Undichtigkeiten im Bereich der Verbindung zur Folge, da die O-Ringe nicht mehr entlang ihres gesamten Umfanges kraftschlüssig mit dem Aufnahmeteil verbunden sind. Ein sicherer und verlustfreier Transport eines Strömungsmediums ist somit nicht gewährleistet.

Der vorliegenden Erfindung liegt nun die Aufgabe zugrunde, die gattungsbildende Vorrichtung zum Verbinden zweier Schlauchleitungen für ein Fluidum, insbesondere zweier beheizbarer Schlauchleitungen, derart auszugestalten und weiterzubilden, dass bei einfacher Handhabbarkeit eine zuverlässige Verbindung realisiert ist.

Die erfindungsgemäße Vorrichtung löst die voranstehende Aufgabe durch die Merkmale des Patentanspruchs 1. Danach ist die eingangs genannte Vorrichtung zum Verbinden zweier Schlauchleitungen für ein Fluidum derart ausgestaltet und weitergebildet, dass mindestens eines der Kupplungsstücke mindestens zwei unterschiedlich dimensionierte und/oder materialmäßig unterschiedlich beschaffene Bereiche zum Führen des jeweils anderen Kupplungsstücks und zum Abdichten zwischen den Kupplungsstücken aufweist.

Erfindungsgemäß ist zunächst einmal erkannt worden, dass zur Realisierung einer dichten Verbindung eine Verkantung der beiden Kupplungsstücke gegeneinander wirksam vermieden werden muss, was durch eine axiale Führung des Eingriffsteils beim Eingreifen in das Aufnahmeteil erreicht werden kann. Eine Verbindung hoher und zuverlässiger Dichtigkeit ergibt sich dann in erfindungsgemäßer Weise durch Ausgestaltung mindestens eines der Kupplungsstücke mit mindestens zwei Bereichen, die unterschiedlich dimensioniert und/oder materialmäßig unterschiedlich beschaffen sind. Dabei dient mindestens einer der Bereiche der axialen Führung des Eingriffsteils zur Vermeidung von Verkantungen, während mindestens ein anderer Bereich zum Abdichten zwischen den Kupplungsstücken dient.

Im Konkreten sind das Aufnahmeteil und das Eingriffsteil zylinderförmig ausgestaltet, wobei das Aufnahmeteil einen kreisförmigen Durchgang aufweist, der sich in Richtung der Zylinderachse in zwei Bereiche unterschiedlichen Durchmessers gliedert. Der vordere Bereich - ein Dichtungsbereich - weist dabei einen größeren Durchmesser auf als der hintere Bereich - ein Führungsbereich.

In vorteilhafter Weise könnte ein vorderer Bereich des Eingriffsteils hinsichtlich seines Durchmessers derart augestaltet sein, dass er mit möglichst geringem Spiel in den Führungsbereich des Aufnahmeteils eingreift, so dass sich im vollständig eingegriffenen Zustand der beiden Kupplungsstücke in diesem Bereich eine formschlüssige Verbindung ergibt. Durch eine derartige axiale Führung des Eingriffsteils sind Verkantungen der beiden Kupplungsstücke gegeneinander ausgeschlossen.

Im Rahmen einer besonders einfachen Ausgestaltung umfasst das Aufnahmeteil im Dichtungsbereich einen mit einem Durchgang versehenen Dichteinsatz, in welchen das Eingriffsteil beim Verbinden der beiden Schlauchleitungen kraftschlüssig eingreift. Der Dichteinsatz ist vorzugsweise aus einem elastischen Material, z. B. aus Silikon gefertigt. In besonders vorteilhafter Weise weist der Durchgang des Dichteinsatzes einen geringfügig kleineren Durchmesser als das Eingriffsteil auf. Dann ergibt sich nämlich beim Einführen des vorzugsweise aus VA-Stahl gefertigten Eingriffsteil in den elastischen Dichteinsatz eine besonders dichte Verbindung, die selbst für den Fall, dass ein Fluidum mit Überdruck durch die Schlauchleitung geführt wird, sicher abdichtet.

Auch das Eingriffsteil könnte zwei unterschiedlich dimensionierte Bereiche umfassen, wobei der hintere Bereich - ein Dichtungsbereich - einen größeren Durchmesser aufweisen könnte als der vordere Bereich - ein Führungsbereich. In vorteilhafter Weise sind die einzelnen Bereiche der beiden Kupplungsstücke so in ihrer Dimensionierung aufeinander abgestimmt, dass beim Zusammenfügen der beiden Kupplungsstücke der vordere Bereich des Eingriffsteils formschlüssig in den hinteren Bereich des Aufnahmeteils eingreift. Gleichzeitig bilden im vollständig eingegriffenen Zustand der beiden Kupplungstücke der mit einem oder mehreren O-Ringen versehene hintere Bereich des Eingriffsteils und der vordere Bereich des Aufnahmeteils eine kraftschlüssig abdichtende Verbindung.

Eine besonders sichere Dichtung ergibt sich, wenn das Eingriffsteil nicht nur in einem einzigen Bereich, sondern in zwei unterschiedlichen Bereichen axial geführt wird. In besonders vorteilhafter Weise sind daher an beiden Kupplungsstücken jeweils drei unterschiedlich dimensionierte und/oder materialmäßig unterschiedlich beschaffene Bereiche ausgebildet, beispielsweise jeweils zwei äußere Dichtungsbereiche und ein mittlerer Führungsbereich. In konstruktiver Hinsicht könnten diese Bereiche derart ausgestaltet sein, dass der Durchmesser des Aufnahmeteils im Dichtungsbereich größer als im hinteren Führungsbereich und kleiner als im vorderen Führungsbereich ist, und die Größenverhältnisse des Eingriffsteils dem entsprechend gewählt werden. Durch die vordere und die hintere axiale Führung wird jegliches Spiel des Eingriffsteils in radialer Richtung wirksam verhindert. Die Dichtung selbst könnte dann ganz einfach durch einen oder mehrere dem Eingriffsteil im Dichtungsbereich zugeordnete O-Ringe hergestellt werden.

Im Hinblick auf eine einfache Herstellung der beiden Kupplungsstücke könnten die Übergänge zwischen den einzelnen Bereichen unterschiedlichen Durchmessers rechtwinkelig ausgebildet sind. Hinsichtlich einer leichteren Führung des Eingriffsteils beim Einführen in das Aufnahmeteil ist es jedoch ebenfalls denkbar, eine Zentrierhilfe vorzusehen, indem die Übergänge angefast werden.

Herkömmliche Vorrichtungen zum Verbinden beheizbarer Schlauchleitungen bzw. Heizschläuche, wie sie zum Transport eines temperierten strömungsfähigen Mediums für Probengasmessungen, Extruderschweißanlagen, in der Heißleimklebetechnik, der Nahrungsmittelindustrie, der chemischen Industrie, für Abfüllvorrichtungen, Etikettiermaschinen, PU-Schaumspritzanlagen, Ölbrennerzuleitungen, Schwerölleitungen, etc. eingesetzt werden, stellen in der Regel Kältebrücken dar, die das Stömungsmedium auskühlen und somit eine Kondensationsgefahr in sich bergen. Bei den genannten Anwendungen ist es daher von Vorteil, wenn das Aufnahmeteil vollständig in die am Ende der Schlauchleitung ausgebildete Abschlußkappe eingelassen ist. Auf diese Weise kann das Problem des Auskühlens des zu transportierenden Mediums bzw. die Kondensationsgefahr im Bereich von Anschlußstellen vermieden werden. Zusätzlichen Heizmaßnahmen erübrigen sich somit.

In vorteilhafter Weise sind die Kopfenden der beiden Abschlusskappen als ebene Flächen ausgestaltet, so dass nach vollständigem Eingreifen der beiden Kupplungstücke ineinander die Kopfenden unmittelbar aneinanderstoßen, wodurch eine kontinuierliche und gleichmäßige Beheizung des Strömungsmediums gewährleistet ist. Es ist weiterhin denkbar, dass auch die Kopfenden der beiden Abschlusskappen ineinandersteckbar ausgestaltet sind.

Im Hinblick auf eine komplexere Verwendbarkeit der Vorrichtung ist zum Verbinden zweier beheizbarer Schlauchsysteme, in denen mehrere Leitungen geführt werden, jeder Leitung jeweils ein in den Kopfenden der Abschlußkappen ausgebildeter Durchgang zugeordnet. In einer speziellen Ausführungsform zum Verbinden zweier beheizbarer Schlauchsysteme, in denen jeweils vier Leitungen geführt werden, sind die Durchgänge im Hinblick auf eine übersichtliche und praktische Anordnung derart angeordnet, dass sie Eckpunkte eines Quadrats bilden und jeweils den gleichen Abstand zum Mittelpunkt des Kopfendes aufweisen.

Sollen durch die einzelnen Leitungen unterschiedliche Strömungsmedien transportiert werden, so könnten die einzelnen Durchgänge in besonders vorteilhafter Weise eine Kodierung aufweisen, so dass die einzelnen Leitungen der beiden Schlauchsysteme in nur genau einer einzigen Steckposition miteinander verbunden werden können. Verwechslungen der einzelnen Anschlüsse sind somit ausgeschlossen. Im Konkreten könnte eine Kodierung beispielsweise durch eine besondere geometrische Formgebung eines der Durchgänge ausgebildet sein.

Häufig ist es notwendig, beheizbare Schlauchleitungen durch Wände zu führen. Diese Notwendigkeit ergibt sich beispielsweise für Motorprüfstände, bei denen die Motorgase den in einem anderen Raum befindlichen Analysegeräten zugeleitet werden müssen. Eine derartige Wanddurchführung kann in besonders vorteilhafter Weise dadurch realisiert werden, dass die den durch die Wand geführten Schiauchleitungen zugeordneten Aufnahmeteile ebenfalls in die Wand eingelassen sind. Die Eingriffsteile der anzuschließenden Schlauchleitungen können dann in besonders einfacher Weise aufgesteckt werden. Umgekehrt könnten auch die Eingriffsteile in die Wand eingelassen sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung von Ausführungsbeispielen der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigt
- Fig. 1: in einem schematischen Querschnitt das Aufnahmeteil und das Eingriffsteil einer ersten Ausführungsform der erfindungsgemäßen Vorrichtung zum Verbinden zweier Schlauchleitungen,
- Fig. 2: in einem schematischen Querschnitt die beiden Kupplungstücke in einem vollständig eingegriffenen Zustand,
- Fig. 3: in einem schematischen Querschnitt zwei Kupplungsstücke einer weiteren Ausführungsform der erfindungsgemäßen Vorrichtung,
- Fig. 4: die gleichen Kupplungsstücke wie in Fig. 4 in einem teilweise eingegriffenen Zustand,
- Fig. 5: die gleichen Kupplungsstücke wie in Fig. 3 und 4 in einem vollständig eingegriffenen Zustand,
- Fig. 6: in einer schematischen Ansicht eine erfindungsgemäße Vorrichtung zum Verbinden zweier beheizbarer Schlauchleitungen und
- Fig. 7: in einer schematischen Darstellung eine erfindungsgemäße Vorrichtung zum Verbinden von Schlauchsystemen, in denen insgesamt vier Leitungen geführt werden.

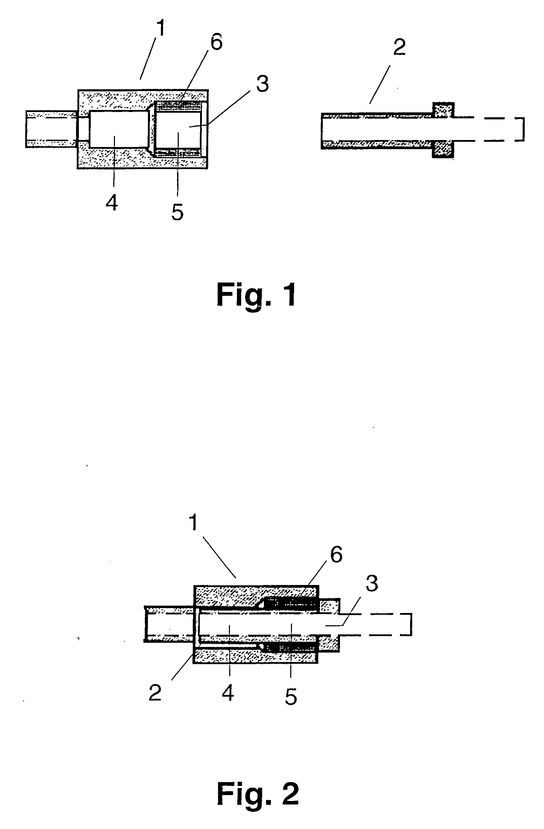

Fig. 1 zeigt in einem schematischen Querschnitt den Aufbau einer erfindungsgemäßen Vorrichtung zum Verbinden zweier Schlauchleitungen mit einem der ersten Schlauchleitung zugeordneten Aufnahmeteil 1 und einem der anderen Schlauchleitung zugeordneten Eingriffsteil 2. Das Aufnahmeteil weist einen Durchgang 3 auf, welcher zwei Bereiche umfasst, einen hinteren Führungsbereich 4 und einen vorderen Dichtungsbereich 5, in welchem ein - ebenfalls mit einem Durchgang versehener - Dichteinsatz 6 angeordnet ist.

Fig. 2 zeigt in einer schematischen Darstellung die beiden Kupplungsstücke 1, 2 in einem vollständig eingegriffenen Zustand. Das Eingriffsteil 2 wird im Führungsbereich 4 des Aufnahmeteils 1 axial geführt. Im Dichtungsbereich 5 des Aufnahmeteils 1 ist eine kraftschlüssig abdichtende Verbindung zwischen dem Dichteinsatz 6 und dem Eingriffsteil 2 realisiert.

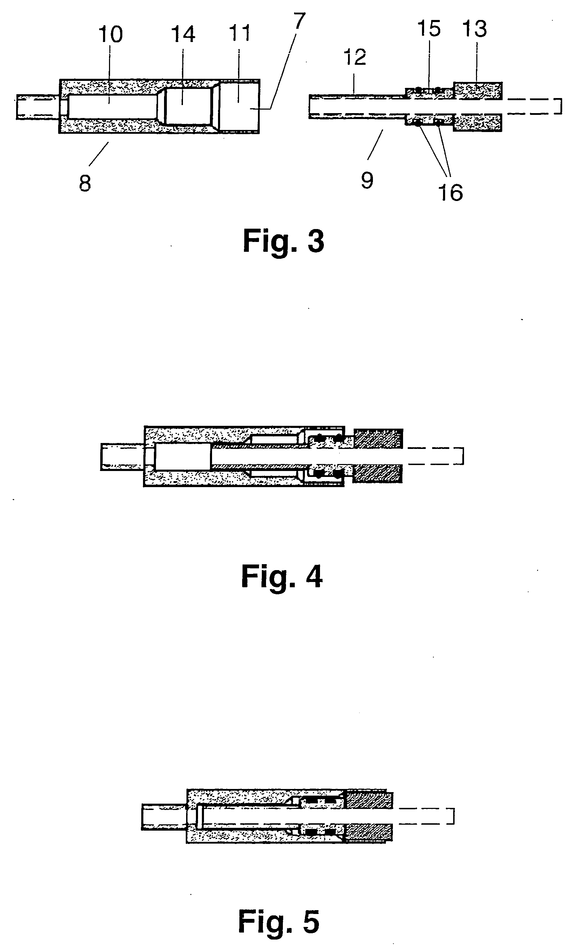

Die Fig. 3, 4 und 5 zeigen im Rahmen einer schematischen Ansicht eine weitere Ausführungsform der erfindungsgemäßen Vorrichtung zum Verbinden zweier Schlauchleitungen. Sowohl der Durchgang 7 des Aufnahmeteils 8 als auch das Eingriffsteil 9 weisen jeweils drei unterschiedlich dimensionierte Bereiche auf, nämlich jeweils zwei äußere Führungsbereiche (10, 11, 12, 13) und einen mittleren Dichtungsbereich (14, 15). Fig. 3 zeigt des Weiteren deutlich, dass die Übergänge zwischen den einzelnen Bereichen zur besseren Führung des Eingriffsteils 9 abgeschrägt sind. Wie in Fig. 4 zu erkennen, greift beim Zusammenfügen der beiden Kupplungsstücke 8, 9 zunächst der vordere Führungsbereich 12 des Eingriffsteils 9 in den hinteren Führungsbereich 10 des Aufnahemeteils 8 und wird hier axial geführt. Anschließend greift der Dichtungsbereich 15 des Eingriffsteils, an welchem zwei O-Ringe 16 angeordnet sind, in Dichtungsbereich 14 des Aufnahmeteils zur Bildung einer kraftschlüssig abdichtenden Verbindung. Schließlich greift - wie in Fig. 5 dargestellt - Führungsbereich 13 des Eingriffsteils zur zusätzlichen axialen Führung in Führungsbereich 11 des Aufnahmeteils. Eine Verkantung der beiden Kupplungsstücke gegeneinander und daraus resultierende Undichtigkeiten der Verbindung sind somit ausgeschlossen.

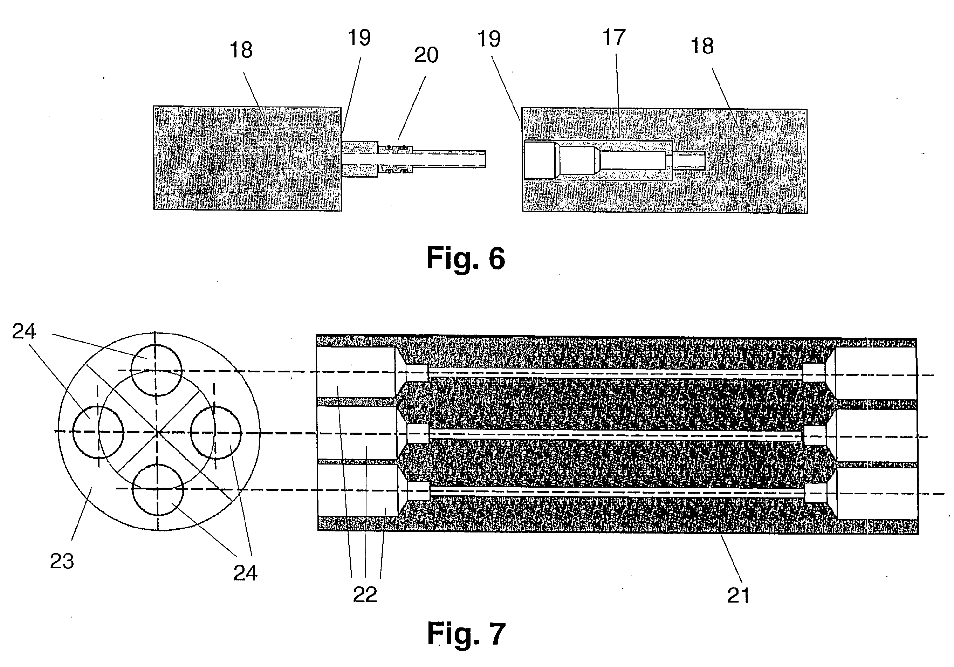

Fig. 6 zeigt in einer schematischen Darstellung eine erfindungsgemäße Vorrichtung zum Verbinden zweier beheizbarer Schlauchleitungen. Zur Vermeidung von Kältebrücken ist das Aufnahmeteil 17 vollständig in eine der am Ende der Schlauchleitungen ausgebildeten Abschlusskappen 18 eingelassen. Die Kopfenden 19 der beiden Abschlusskappen 18 sind als ebene Flächen ausgebildet, so dass diese nach vollständigem Eingreifen des Eingriffsteils 20 in das Aufnahmeteil 17 unmittelbar aneinanderstoßen.

Fig. 7 zeigt in schematischer Ansicht eine erfindungsgemäße Vorrichtung zum Verbinden von Schlauchsystemen 21, in denen vier Leitungen geführt werden. Jedem Aufnahmeteil 22 ist dabei ein in der Abschlusskappe 23 - in Fig. 7 in einer Draufsicht dargestellt - ausgebildeter Durchgang 24 zugeordnet.

Zur Vermeidung von Wiederholungen wird ansonsten auf die allgemeine Beschreibung verwiesen.

Abschließend sei besonders darauf hingewiesen, dass die voranstehend erörterten Ausführungsbeispiele lediglich zur Beschreibung der beanspruchten Lehre dienen, diese jedoch nicht auf diese Ausführungsbeispiele einschränken.

## Patentansprüche

1. Vorrichtung zum Verbinden zweier Schlauchleitungen für ein Fluidum, umfassend ein als Eingriffsteil ausgebildetes, der einen Schlauchleitung zugeordnetes erstes Kupplungsstück (2) und ein als Aufnahmeteil ausgebildetes, der anderen Schlauchleitung zugeordnetes zweites Kupplungsstück (1), weiches zur Aufnahme des Eingriffsteils (2) dient,
**dadurch gekennzeichnet, dass** mindestens eines der Kupplungsstücke (1, 2) mindestens zwei unterschiedlich dimensionierte und/oder materialmäßig unterschiedlich beschaffene Bereiche (4, 5) zum Führen des jeweils anderen Kupplungsstücks (1, 2) und zum Abdichten zwischen den Kupplungsstücken (1, 2) auf weist.

2. Vorrichtung nach Anspruch 1, **dadurch gekennzeichnet, dass** das Aufnahmeteil (1) einen Durchgang (3) mit zwei Bereichen (4, 5) unterschiedlichen Durchmessers aufweist, wobei der Durchgang (3) in dem vorderen Bereich - Dichtungsbereich (5) - einen größeren Durchmesser als in dem hinteren Bereich - Führungsbereich (4) - aufweisen kann und wobei ein vorderer Bereich des Eingriffsteils (2) einen zumindest geringfügig kleineren Durchmesser als der Durchgang (3) im Führungsbereich (4) des Aufnahmeteils (1) aufweisen kann.

3. Vorrichtung nach Anspruch 1 oder 2, **dadurch gekennzeichnet, dass** das Aufnahmeteil (1) im Dichtungsbereich (5) einen mit einem Durchgang versehenen Dichteinsatz (6) aufweist, der vorzugsweise aus einem elastischen Material, insbesondere aus Silikon, gefertigt ist, wobei der Durchgang des Dichteinsatzes (6) einen zur kraftschlüssigen Aufnahme des Eingriffsteils (2) angepassten Durchmesser aufweisen kann.

4. Vorrichtung nach Anspruch 3, **dadurch gekennzeichnet, dass** das Eingriffsteil (9) zwei Bereiche (12, 15) unterschiedlichen Durchmessers aufweist, wobei das Eingriffsteil in dem hinteren Bereich - Dichtungsbereich (15) - einen größeren Durchmesser als in dem vorderen Bereich - Führungsbereich (12) - aufweisen kann und/oder wobei das Eingriffsteil (9) im Dichtungsbereich (15) mindestens einen O-Ring (16) aufweisen kann und/oder wobei der Durchgang (7) des Aufnahmeteils (8) sowie das Eingriffsteil (9) jeweils drei Bereiche (10, 11, 14; 12, 15, 13) unterschiedlichen Durchmessers aufweisen kann und/oder wobei der Durchgang (7) des Aufnahmeteils (8) sowie das Eingriffsteil (9) jeweils zwei äußere Führungsbereiche (10, 11; 12, 13) und einen mittleren Dichtungsbereich (14; 15) aufweisen kann.

5. Vorrichtung nach einem der Ansprüche 1 bis 4, **dadurch gekennzeichnet, dass** die Übergänge zwischen den einzelnen Bereichen (10, 11, 14; 12, 15, 13) rechtwinkelig ausgebildet sind.

6. Vorrichtung nach einem der Ansprüche 1 bis 5, **dadurch gekennzeichnet, dass** die Übergänge zwischen den einzelnen Bereichen (10, 11, 14; 12, 15, 13) abgeschrägt sind.

7. Vorrichtung nach einem der Ansprüche 1 bis 6, **dadurch gekennzeichnet, dass** das Aufnahmeteil (17) vollständig in eine der am Ende der Schlauchleitungen ausgebildeten Abschlusskappen (18) eingelassen ist, wobei die Kopfenden (19) der beiden Abschlusskappen (18) vorzugsweise ebene Flächen bilden oder ineinandersteckbar ausgebildet sind, wobei jeder der in einem beheizbaren Schlauchsystem (21) geführten Leitungen jeweils ein in den Kopfenden der Abschlusskappen (23) ausgebildeter Durchgang (24) zugeordnet sein kann.

8. Vorrichtung nach Anspruch 7, **dadurch gekennzeichnet, dass** die Durchgänge (24) für vier in einem beheizbaren Schlauchsystem (21) geführte Leitungen Eckpunkte eines Quadrats bilden und jeweils den gleichen Abstand zum Mittelpunkt des Kopfendes aufweisen, wobei die Durchgänge (24) eine Kodierung aufweisen können.

9. Vorrichtung nach einem der Ansprüche 1 bis 8, **dadurch gekennzeichnet, dass** die Aufnahmeteile (1, 8,17, 22) in eine Wand eingelassen sind.

10. Vorrichtung nach einem der Ansprüche 1 bis 9, **dadurch gekennzeichnet, dass** die Eingriffsteile (2, 9, 20) in eine Wand eingelassen sind.
